Europäisches Patentamt

European Patent Office

Office européen des brevets

(19)

(11) Numéro de publication: **0 167 436**
**A1**

(12) # DEMANDE DE BREVET EUROPEEN

(21) Numéro de dépôt: 85401114.5

(22) Date de dépôt: 06.06.85

(51) Int. Cl.⁴: **F 16 K 17/04**
**F 16 K 24/00**

(30) Priorité: 07.06.84 FR 8408922

(43) Date de publication de la demande:
08.01.86 Bulletin 86/2

(84) Etats contractants désignés:
AT BE CH DE GB IT LI LU NL SE

(71) Demandeur: DOSAPRO MILTON ROY, Société dite:

F-27360 Pont Saint Pierre(FR)

(72) Inventeur: Malizard, Max-Albert
13 Rue le Long des Bois Saint Rémy l'Honoré
F-78690 Les Essarts Le Roy(FR)

(72) Inventeur: Lefevre, Rémy
7 Chemin de la Pâture Radepont
F-27380 Fleury-Sur-Andelle(FR)

(74) Mandataire: Robert, Jean-Pierre
CABINET BOETTCHER 23, rue la Boétie
F-75008 Paris(FR)

(54) Soupape de décharge à purge incorporée.

(57) Il s'agit en fait d'un clapet 6 disposé à l'extrémité d'une tige 6a montée à coulissement dans un guide 8 fixe solidaire des parois de la chambre hydraulique à contrôler, coopérant avec un siège 5 et rappelé sur ce dernier par un ressort 7. Le canal de décharge 3,3a ainsi constitué avec son clapet possède une dérivation en amont du siège 5 qui conduit à l'espace ou jeu annulaire entre le guide 8 et la tige 6a pour constituer un conduit de purge à forte perte de charge.

Application aux pompes hydrauliques.

FIG. 1

EP 0 167 436 A1

La présente invention concerne une soupape de décharge pour une chambre hydraulique soumise à des variations cycliques de pression qui comporte un dispositif de purge pour notamment l'évacuation du fluide gazeux qui peut être contenu dans la chambre hydraulique. Elle concerne également une application intéressante de cette soupape à purge incorporée pour une pompe à membrane à commande hydraulique à haute pression.

Les soupapes de décharge sont bien connues, notamment dans les pompes à commande hydraulique, pour limiter la pression de fonctionnement et éviter les risques de casse. Il est également connu de pourvoir ces chambres hydrauliques d'un dispositif de purge pour évacuer l'air ou les gaz contenus dans la chambre hydraulique dont le caractère compressible nuit au bon fonctionnement d'une pompe, en diminuant par exemple le débit, surtout à haute pression (de l'ordre de plusieurs centaines de bars).

Cependant on a constaté que dans cette plage de pressions, les purges d'air ne fonctionnent pas de manière satisfaisante et l'évacuation complète d'air nécessite une fuite d'huile en quantité importante qui nuit au rendement de la pompe.

Par ailleurs, l'implantation de la purge doit être au point le plus haut de la chambre hydraulique là où se rassemble le gaz. Or à cet endroit, la mise en place d'une purge n'est pas toujours possible compte tenu qu'il existe une soupape de décharge séparée également disposée dans cette zone.

C'est pourquoi il a déjà été proposé d'incorporer dans une soupape de décharge un gicleur central obturé par un clapet à ressort taré sous forme d'une aiguille qui définit à l'intérieur d'un alésage un orifice calibré par lequel le matelas gazeux peut s'échapper tout en offrant une grande perte de charge à l'évacuation d'huile. L'inconvénient de ce dispositif provient du fait que le clapet et l'aiguille sont des pièces mobiles qu'il convient de rappeler par un ressort, qu'elles sont logées dans un siège de soupape dont les dimensions ne sont pas très importantes, la fabrication nécessitant alors des usinages précis de petite taille, qu'il constitue pour toutes ces raisons un dispositif fragile pouvant présenter des risques non négligeables de mauvais fonctionnement.

L'invention entend pallier ces inconvénients en proposant un ensemble soupape-purge simplifié dont l'usinage et l'entretien ne présentent aucune difficulté et qui met en oeuvre un nombre de pièces beaucoup moins important que la technique connue.

A cet effet l'invention a pour objet une soupape de décharge à purge incorporée placée sur le canal de décharge d'une chambre hydraulique soumise à des variations périodiques de pression, constituée par un clapet disposé à l'extrémité d'une tige montée à coulissement dans un guide fixe solidaire des parois de la chambre, par un siège fixe traversé par ledit canal de décharge et par un organe de rappel attelé entre le  guide et ledit clapet.

Selon l'une de ces caractéristiques, ledit canal de décharge possède une dérivation prenant naissance en amont dudit siège, conduisant à l'espace ou jeu annulaire situé entre le guide et la tige susdite et constituant un conduit de purge à forte perte de charge.

De manière avantageuse, le conduit de purge est, en aval dudit jeu annulaire connecté à la partie aval du canal de décharge par rapport audit siège. Il est intéressant de noter que cette partie de connection peut être transparente pour constituer un organe de visualisation du fonctionnement de la purge.

Dans une réalisation préférentielle de l'invention la soupape susdite est différentielle s'ouvrant vers le bas alors que la tige de soupape est dirigée vers le haut, et le canal de décharge comporte une chambre située au-dessus du siège de soupape, la dérivation étant alors réduite audit espace annulaire en communication directe avec ladite chambre en son point le plus haut.

L'invention a également pour objet une pompe
à membrane à commande hydraulique qui possède une soupape
avec purge incorporée du type de celle décrite ci-dessus
et qui comporte un conduit de purge dont une portion est
constituée par un tube transparent de connection de la
purge à une bâche d'huile pour ainsi former un témoin de
fonctionnement de la soupape  selon l'invention.

D'autres avantages et caractéristiques de
l'invention apparaîtront au cours de la description donnée
ci-après d'un exemple de réalisation de la soupape équipée
d'un dispositif de purge.

Il sera fait référence aux dessins annexés
dans lesquels :

- la figure 1 est un schéma de principe d'une
soupape conforme à l'invention,

- la figure 2 illustre un mode de réalisation
préféré de cette soupape,

- la figure 3 illustre de manière schématique
une pompe à membrane équipée de la soupape selon l'invention.

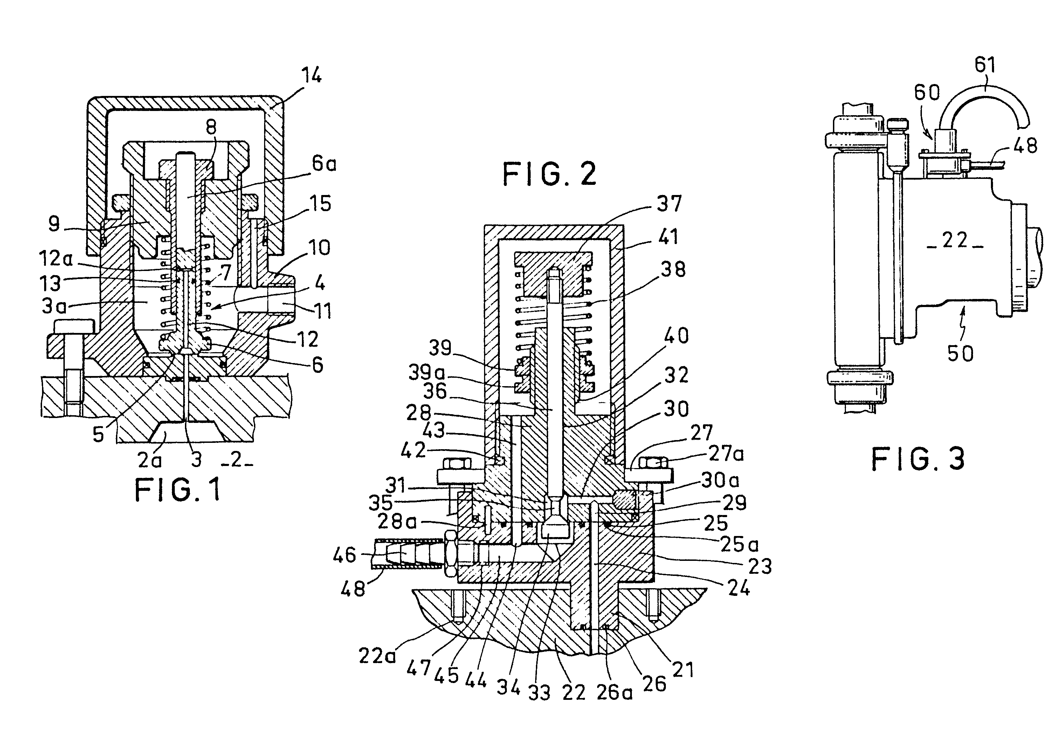

En se reportant tout d'abord à la figure 1
on voit la paroi 1 d'une chambre hydraulique 2 dont la
partie la plus haute 2a est susceptible de recueillir le
gaz (air)  contenu dans la chambre. De cette partie 2a est
issu un canal de décharge 3 comportant une soupape 4
constituée par un siège fixe 5 sur lequel est plaqué un
clapet 6 sous l'effet d'un ressort de rappel tarable 7.
Le clapet 6 est prolongé par une tige de guidage 6a montée
à coulissement dans un guide 8 qui, par l'intermédiaire
d'un organe de montage 9 est solidaire du corps de soupape 10, lui-même fixé sur la paroi 1 de la chambre hydraulique. L'organe de montage 9 permet le tarage du ressort 7.

Le canal de décharge 3 se prolonge au-delà
du siège de soupape 5 par une partie aval 3a qui sort du
corps de soupape par un orifice 11 auquel peut être raccordé un conduit de collecte du fluide pour le reconduire
à une bâche ou un réservoir d'huile non représenté.

En amont du siège 5, le canal 3 comporte une dérivation 12 qui, ici ménagée à l'intérieur du clapet 6 et de sa tige 6a, aboutit à une gorge périphérique 12a de la tige 6a. Cette gorge 12a est située, sur la tige, au-delà d'un joint annulaire 13 par rapport au clapet 6. On aura prévu un certain jeu annulaire entre la tige 6a et son guide 8, pour constituer un passage à forte perte de charge pour le fluide provenant de la dérivation 12. On notera à ce propos que la perte de charge est d'autant plus importante que la longueur axiale du jeu parcouru est importante. Le rôle du joint 13 est, à cet égard, d'interdire au fluide d'emprunter un trajet à perte de charge plus faible par l'extrémité inférieure du guide 8. Le fluide s'échappant du jeu annulaire susdit est recueilli dans une enceinte, formée au-dessus du corps 10 de valve par un bouchon 14, cette enceinte communiquant au moyen d'un orifice 15 avec l'orifice 11 de retour du fluide à la bâche.

Le matelas d'air contenu en partie haute 2a de la chambre est soumis aux variations de pressions régnant dans la chambre. Dans le cas de la chambre hydraulique de commande d'une pompe à membrane, ces variations sont engendrées par la course alternative d'un piston, entre plusieurs centaines de bars dans la course de refoulement, et la pression atmosphérique ou moins dans la course d'aspiration. Ainsi l'air ou le mélange émulsionné air-huile est forcé par la dérivation 12 et la gorge 12a dans le jeu annulaire entre le guide 8 et la tige 6a sous une très forte pression. La fuite permanente à ce niveau permet une bonne évacuation du gaz à haute pression et la grande perte de charge limite très sensiblement la fuite d'huile.

En outre cette forte perte de charge interdit un retour d'air dans la chambre pendant la phase d'aspiration, la dépression y régnant étant insuffisante pour réaspirer l'air évacué.

Ainsi, au fur et à mesure que l'air se rassemble dans la partie 2a, il est évacué progressivement à chaque course de refoulement, sans qu'il soit mis en oeuvre de soupape de purge. Bien entendu, la soupape de décharge garde sa fonction qui est de permettre l'échappement du liquide au travers du siège 5 vers les conduits 3a et 11 lorsqu'une surpression excessive se produit. Le tarage du ressort 7 permet d'ajuster la valeur limite de pression au-delà de laquelle la soupape doit s'ouvrir.

La figure 2 illustre une variante de réalisation de la figure 1 dans laquelle la soupape est différentielle. Ainsi sur cette figure le corps de soupape possède un embout 21 ajusté dans un bloc 22 représentant schématiquement la partie haute de la chambre hydraulique à contrôler. Cet embout est en une seule pièce avec une première partie 23 du corps de soupape dans lequel on a ménagé un orifice 24, une gorge 25 pour recevoir un joint torique 25a et une gorge 26 équipée d'un joint torique 26a.

Ce bloc 23 est fixé de façon étanche dans le bloc 22 au moyen d'une bride 27 et de vis 27a qui viennent coopérer avec des orifices taraudés 22a du corps 22.

Le corps de soupape possède une seconde partie 28 dans laquelle un orifice 29 est ménagé débouchant sur l'une de ses faces et se raccordant à un orifice 30 qui lui est perpendiculaire et qui est obturé à l'une de ses extrémités par un bouchon 30a. Cette seconde partie 28 possède également un chambrage 31 dans lequel débouche le conduit 30. Ce chambrage 31 communique avec un alésage 32 qui lui est coaxial. Ce chambrage 31 est par ailleurs situé en regard d'un chambrage 33 ménagé dans la partie 23 du corps de soupape. L'indexation de ces deux chambrages ainsi que celle des orifices 29 et 24 est assurée par un pion 28a de positionnement. On notera que le chambrage 33 est de diamètre plus important que le chambrage 31. L'arête circulaire qui en résulte constitue le siège d'un clapet 3 tronconique 34 qui est porté par l'extrémité d'une tige (ou queue) de soupape possédant au niveau du chambrage 31 une partie de diamètre réduit 35 et dans l'alésage 32 une partie 36 de diamètre plus important mais restant cependant inférieur au diamètre du siège du clapet susdit.

L'extrémité de la tige 35, 36 opposée au clapet 34 est filetée pour recevoir une butée 37 sur laquelle prend appui un ressort 38 dont la tension peut être réglée au moyen d'un écrou 39 (avec contre-écrou 39a) porté par le filetage 40 de la seconde partie 28 du corps de soupape. Un couvercle 41 ferme la partie supérieure de la soupape de manière étanche grâce au joint torique 42. Un conduit 43 met en communication l'intérieur du couvercle 41 avec un orifice 44 correspondant dans le bloc 23 qui lui-même débouche dans un conduit 45 d'évacuation du chambrage 33. Le conduit 45 peut être relié par un dispositif de raccordement 46, 47, 48 à la bâche d'huile de l'appareil.

Le fonctionnement de cette variante de réalisation de l'invention est semblable à celui décrit en regard de la figure 1. Ainsi le gaz qui se rassemble dans la chambre hydraulique transite par le canal 24 (canal de décharge), les conduits 25 et 30 jusqu'au chambrage 31 et là emplit la partie supérieure de ce chambrage. Pendant chaque phase de refoulement (si la chambre est une chambre de commande hydraulique), le gaz est forcé entre l'alésage 32 et la partie 36 de tige dans le jeu annulaire faible qui existe à cet effet pour aboutir dans le volume intérieur du couvercle 41. La fuite d'huile concommitante est collectée par le conduit 43 et fait retour au réservoir d'huile par le conduit 45. Si la pression de la chambre hydraulique est excessive, le fluide contenu dans le chambrage 31 poussera le clapet 34 vers le bas et le fluide se déchargera en direction du réservoir par le conduit 45. On notera à cet égard que la détermination de la pression de sécurité est effectuée par le tarage du ressort 38 qui équilibre l'effet de la pression sur la surface utile du clapet 34 puisqu'il est différentiel c'est-à-dire la surface du siège de soupape à laquelle on retranche la section de la partie 36 de la tige. Cette disposition présente l'avantage de mettre en oeuvre un ressort d'effet égal à 10 - 30 % de celui du ressort qu'il aurait fallu employer pour une section de passage identique dans le cas de la figure 1 notamment.

Sur la figure 3 enfin on a représenté partiellement et très schématiquement une pompe à membrane 50 à commande hydraulique équipée de la soupape 60 selon l'invention, dans laquelle le conduit de collecte de fuite d'huile est constitué par un tube 61 transparent, extérieur au corps de soupape qui constitue un excellent indicateur du fonctionnement de l'appareil. En effet, le débit de fuite d'huile est suffisamment important (de l'ordre de 20 % du débit de la pompe aux très hautes pressions) pour être visible à l'oeil nu.

L'invention trouve une application intéressante dans le domaine de la construction mécanique.

8                                    0167436

REVENDICATIONS

1.- Soupape de décharge à purge incorporée
placée sur le canal de décharge (3,3a) d'une chambre 2
hydraulique soumise à des variations périodiques de pression, constituée par un clapet (6) disposé à l'extrémité
d'une tige (6a) montée à coulissement dans un guide 8 fixe
solidaire des parois (1) de la chambre (2) par un siège (5) fixe
traversé par ledit canal (3,3a) de décharge et par un organe
de rappel 7 attelé entre le guide (8) et ledit clapet 6,
caractérisée en ce que ledit canal (3,3a) de décharge
possède une dérivation (12) prenant naissance en amont
dudit siège (5), conduisant à l'espace annulaire situé
entre le guide (8) et la tige (6a) susdite et constituant
un conduit de purge à forte perte de charge.

2.- Soupape selon la revendication 1, caractérisée
en ce que ledit conduit de purge est, en aval (15) dudit jeu
annulaire, connecté à la partie aval (11) du canal(3,3a) de
décharge par rapport audit siège (5).

3.- Soupape de décharge selon la revendication
2, caractérisée en ce qu'au moins une portion (61) de la
partie du conduit de purge en aval du jeu annulaire susdit
est transparente pour constituer un organe de visualisation
du fonctionnement de la purge.

4.- Soupape selon l'une quelconque des revendications 1 à 3, caractérisée en ce que l'embranchement de
ladite dérivation (12) sur le canal de décharge (3,3a) est
situé au point le plus haut de ce canal qui constitue le
point le plus haut de la chambre hydraulique (2).

5.- Soupape selon l'une quelconque des revendications précédentes,caractérisée en ce que la dérivation
(12) susdite est ménagée à l'intérieur de la tige (6a).

6.- Soupape selon l'une quelconque des revendications 1 à 4, caractérisée en ce qu'elle est différentielle, en ce qu'elle s'ouvre vers le bas, la tige
(35,36) de soupape étant dirigée vers le haut, et en ce
que ledit canal de décharge (24,25,29,30) comporte une chambre
(31) située au-dessus du siège de soupape, ladite dérivation étant réduite audit espace annulaire en communication directe avec ladite chambre (31) en son point le plus haut.

7.- Pompe à membrane (50) à commande hydraulique, caractérisée en ce que la chambre hydraulique de commande comporte une soupape (60) selon l'une quelconque des revendications précédentes.

8.- Pompe selon la revendication 7, caractérisée en ce que le conduit de purge est connecté à une bâche de récupération d'huile par un tube transparent (61) formant témoin de fonctionnement de la pompe.

FIG. 1

FIG. 2

FIG. 3

1/1

0167436

Office européen
des brevets

## RAPPORT DE RECHERCHE EUROPEENNE

## DOCUMENTS CONSIDERES COMME PERTINENTS

| Categorie | Citation du document avec indication, en cas de besoin des parties pertinentes | Revendication concernee | CLASSEMENT DE LA DEMANDE (Int. Cl 4) |
|---|---|---|---|
| A | GB-A-2 066 375  (AKIRA MIZUNO) | | F 16 K   17/04 F 16 K   24/00 |
| A | GB-A-  219 140  (KITSON) | | |
| A | US-A-3 031 845  (LUDWIG) | | |
| A | DE-A-1 901 776  (WINTEROTT) | | |
| A | US-A-1 690 033  (NOBLE) | | |

DOMAINES TECHNIQUES RECHERCHES (Int. Cl 4)

F 16 K
F 15 B
F 04 B

Le present rapport de recherche a été établi pour toutes les revendications

| Lieu de la recherche | Date d'achevement de la recherche | Examinateur |
|---|---|---|
| LA HAYE | 21-08-1985 | VERELST P.E.J. |